# EUROPÄISCHE PATENTSCHRIFT

(11) **EP 4 095 016 B1**
(45) Veröffentlichungstag und Bekanntmachung des Hinweises auf die Patenterteilung: **10.09.2025**
(21) Anmeldenummer: 22170090.9
(22) Anmeldetag: 26.04.2022
(51) Int. Cl.: B62D 5/00

(54) **STEER-BY-WIRE-LENKSYSTEM**
STEER-BY-WIRE STEERING SYSTEM
SYSTÈME DE DIRECTION À COMMANDE PAR CÂBLE

(30) Priorität: 27.05.2021 DE 102021205413
(43) Veröffentlichungstag der Anmeldung: 30.11.2022
(73) Patentinhaber: VOLKSWAGEN AG, 38440 Wolfsburg (DE)
(72) Erfinder: Kreis, Christopher, 38126 Braunschweig (DE); Sachs, Tobias, 38176 Wendeburg (DE); Leibel, Wassili, 27751 Delmenhorst (DE); Schöttler, Frank, 38102 Braunschweig (DE)

(56) Entgegenhaltungen:
- WO-A1-02/32742
- DE-A1- 10 248 343
- DE-A1- 102019 007 715

## Beschreibung

### Technisches Gebiet

Die Erfindung betrifft Steer-by-Wire-Lenksysteme für Kraftfahrzeuge, und insbesondere eine Architektur für die Komponenten des Steer-by-Wire-Lenksystems, mit der die Anforderungen hinsichtlich funktionaler Sicherheit erfüllt werden können.

### Technischer Hintergrund

Künftige Lenksysteme werden als Steer-by-Wire-Lenksysteme ausgeführt. Bei Steer-by-Wire-Lenksystemen entfällt eine Lenkzwischenwelle, die eine mechanische Verbindung zwischen einer Lenkhandhabe (Lenkrad) und einer Zahnstange, die mechanisch mit dem Gelenk zu den Rädern gekoppelt ist, vorsieht. Ein derartiges Lenksystem weist eine Lenkradeinheit auf, die in Kommunikationsverbindung mit einer Lenkungseinheit steht. In der Lenkradeinheit wird ein Lenkwinkel erfasst und an die Lenkungseinheit übermittelt, die den entsprechenden Lenkradwinkel in einen Lenkwinkel für die gelenkten Räder umsetzt. Die Lenkradeinheit weist einen Rückkopplungsaktuator auf, der direkt oder über ein Getriebe mit der Lenkhandhabe verbunden ist, um dem Fahrer eine Kraftrückkopplung zu geben, die ein angenehmes Lenkgefühl und eine zuverlässige Bedienung der Lenkung gewährleistet.

Aufgrund der fehlenden mechanischen Verbindung zwischen der Lenkradeinheit und der Lenkungseinheit bestehen hohe Sicherheitsanforderungen, die Lenkwinkelinformation zuverlässig zu erfassen und diese an die Lenkungseinheit zu übermitteln.

Aus der Druckschrift IN 2019 21007278A ist ein System zur dynamischen Änderung der Lenkübersetzung eines motorisierten Fahrzeugs bekannt, um den Winkel der Antriebsräder zu steuern. Das System umfasst eine Lenkungssteuereinheit, zwei Lenkwinkelgeneratoreinheiten, einen Lenkungssteuerungsmechanismus, mindestens ein Paar von Lenkmotoren, und eine Drehmoment-Rückkopplungseinheit, wobei die Lenkwinkelgeneratoreinheit, die betriebsmäßig mit dem Lenkungssteuerungsmechanismus verbunden ist, Daten von Sensoren sammelt, die innerhalb des Fahrzeugs vorgesehen sind. Daraufhin wird ein Lenkwinkelsignal erzeugt, um die Lenkungssteuereinheit zu steuern. Das System ist mit einer ersten Lenkwinkelgeneratoreinheit und einer zweiten Lenkwinkelgeneratoreinheit versehen, wobei jede der Lenkwinkelgeneratoreinheiten unabhängig voneinander arbeitet, um den Lenkwinkel für die Bewegung der Räder zu erzeugen, wobei die Lenkungssteuereinheit zur Prüfung der Plausibilität des Lenkwinkels ausgebildet ist.

Die Druckschrift DE 10 2019 007 715 A1 offenbart ein Steer-by-Wire-System für ein Fahrzeug, umfassend ein erstes Subsystem und ein zweites Subsystem, welche voneinander unabhängig sind und jeweils ausgebildet sind zur Erfassung eines Lenkhandhabewinkels einer Lenkhandhabe des Fahrzeugs mittels jeweils eines Lenkhandhabewinkelsensors und zum Lenken des Fahrzeugs durch Einstellung eines Radwinkels mindestens eines Rades des Fahrzeugs in Abhängigkeit von dem erfassten Lenkhandhabewinkel mittels jeweils einer Lenkaktoreinheit, wobei ein von den beiden Subsystemen unabhängiges drittes Subsystem, welches ausgebildet ist, um den Lenkhandhabewinkel der Lenkhandhabe des Fahrzeugs mittels eines dritten Lenkhandhabewinkelsensors zu erfassen und das Fahrzeug in Abhängigkeit von dem erfassten Lenkhandhabewinkel mittels mindestens eines vom ersten Subsystem und zweiten Subsystem unabhängigen Querführungsbeeinflussungssystems zu lenken.

Die Druckschrift WO 02/32742 A1 offenbart ein Verfahren zum Betreiben eines Steuergeräts für eine Steer-by-Wire-Lenksystem eines Fahrzeugs, wobei die Eingangssignale Lenkradwinkel, Lenkwinkel, auf die gelenkten Räder wirkendes Rückstellmoment von einem Feeedback-Aktuator, und auf eine Lenkhandhabe übertragenes Moment erfasst werden, wobei die erfassten Eingangssignale durch Plausibilitätsprüfungen und und/oder analytische Redundanz überwacht werden und wobei mindestens ein auf die gelenkten Räder des Fahrzeugs wirkender Lenksteller in Abhängigkeit des Lenkradwinkels angesteuert wird. Es wird mindestens ein auf ein Lenkrad wirkender Feedback-Aktuator in Abhängigkeit des Rückstellmoments angesteuert. Es werden die Funktionen des Steuergeräts und die Verfügbarkeit einer Rückfallebene sowie eine Einrichtung zum Aktivieren der Rückfallebene überwacht und von der Steer-by-Wire-Lenkung auf die Rückfallebene bei Auftreten eines Fehlers in der Steer-by Wire-Lenkung umgeschaltet.

Die Druckschrift DE 102 48 343 A1 offenbart ein Verfahren zur Ansteuerung eines Betätigungskraftsimulators einer Fahrzeuglenkung, welcher Betätigungskraftsimulators einer von einem Fahrer betätigbaren Lenkbetätigungseinrichtung zugeordnet ist, mit den Schritten: Ermittlung mindestens einer ersten Eingangsgröße, die einen fahrdynamischen Zustand des Fahrzeugs beschreibt (fahrdynamische Größe), Ermittlung mindestens einer zweiten Eingangsgröße, die ein auf die lenkbaren Räder des Fahrzeugs bzw. ein mit den lenkbaren Rädern des Fahrzeugs verbundenes oder verbindbares Stellmittel einwirkendes Moment beschreibt (Stellmoment), Ermittlung mindestens einer dritten Eingangsgröße, die den Winkel einer Verschwenkung der lenkbaren Räder des Fahrzeugs beschreibt (Stellwinkel), Ermittlung mindestens einer Ausgangsgröße auf Grundlage der mindestens drei Eingangsgrößen, welche Ausgangsgröße ein auf die Lenkbetätigungseinrichtung einwirkendes Moment beschreibt (Betätigungsmoment), und Ansteuerung des Betätigungskraftsimulators nach Maßgabe des ermittelten Betätigungsmoments, zwecks Beaufschlagung der Lenkbetätigungseinrichtung mit einem bestimmten Betätigungsmoment bzw. einer Betätigungskraft.

Weitere herkömmliche Lösungen, ein Steuergerät in der Lenkradeinheit redundant auszubilden, sind technisch aufwendig, und daher ist es Aufgabe der vorliegenden Erfindung, ein verbessertes Steer-by-Wire-Lenksystem bereitzustellen, das eine Signalverarbeitungsarchitektur aufweist, die kosteneffizient ist und die Anforderungen hinsichtlich funktionaler Sicherheit erfüllen kann.

### Offenbarung der Erfindung

Diese Aufgabe wird durch das Steer-by-Wire-Lenksystem gemäß Anspruch 1 gelöst.

Weitere Ausgestaltungen sind in den abhängigen Ansprüchen angegeben.

Gemäß einem ersten Aspekt ist ein Steer-by-Wire-Lenksystem zur Lenkung eines Kraftfahrzeugs vorgesehen, umfassend:
- eine Lenkradeinheit, die aufweist:
   ∘ eine Lenkhandhabe;
   ∘ mehrere Lenkradwinkelsensoren zur redundanten Erfassung einer Lenkradwinkelinformation,
   ∘ eine Rückkopplungseinheit, die ausgebildet ist, um eine haptische Rückkopplung auf die Lenkhandhabe auszuüben;
   o eine Steuereinheit, die über ein erstes oder ein privates Datenbussystem mit einer Lenkungseinheit in Verbindung steht, um eine Angabe über ein Rückkopplungsmoment zu erhalten und um die Rückkopplungseinheit so anzusteuern, dass diese die haptische Rückkopplung auf die Lenkhandhabe ausübt;
- eine Lenkungseinheit, die aufweist:
   ∘ einen Lenkaktuator, der über eine Lenkungsmechanik mit gelenkten Rädern in Verbindung steht, um den Lenkwinkel der gelenkten Räder einzustellen;
   ∘ ein Lenkungssteuergerät, das ausgebildet ist, um mehrere Lenkradwinkelinformationen von den mehreren Lenkradwinkelsensoren zu erhalten, diese zu plausibilisieren und abhängig von dem plausibilisierten Lenkradwinkel den Lenkaktuator anzusteuern;
wobei die Lenkradwinkelsensoren die jeweiligen Lenkradwinkelinformationen über separate Kommunikationsverbindungen an die Lenkungseinheit übermitteln.

Die Sicherheitsanforderungen an Steer-by-Wire-Lenksysteme sind hoch. Insbesondere sind für Lenksysteme in Kraftfahrzeugen Sicherheitsziele entsprechend der ISO 26262 festgelegt. Diesbezüglich ist bestimmt, dass die Lenkradwinkelinformation gemäß den Sicherheitsstandard ASIL D in der Lenkungseinheit, die die Lenkaktuatorik ansteuert, verfügbar ist. Die Funktion der haptischen Rückkopplung muss dagegen lediglich den weniger restriktiven Sicherheitsstandard ASIL B erfüllen. Die Lenkungseinheit muss aufgrund der hohen Sicherheitsvorgabe bezüglich seiner Verfügbarkeit vollständig redundant ausgelegt sein.

Die oben vorgeschlagene Systemarchitektur eines Steer-by-Wire-Lenksystems schlägt vor, einen Lenkradwinkelsensor redundant in der Lenkradeinheit auszuführen und diesen separat mit einem Steuergerät der Lenkungseinheit zu verbinden, so dass in der Lenkungseinheit die Plausibilisierung des Lenkradwinkels stattfinden kann. Das hat den Vorteil, dass zum einen das Steuergerät der Lenkradeinheit sehr einfach ausgeführt werden kann, insbesondere einkanalig, da die haptische Rückkopplung lediglich mit ASIL B abgesichert sein muss, während das Steuergerät der Lenkungseinheit ohnehin zweikanalig, d.h. ausgelegt zur Verarbeitung von zwei redundanten Lenkradwinkeln, und redundant ausgeführt sein muss. Deshalb sind hier die technischen Voraussetzungen für die höhere Sicherheitsstufe (ASIL D) für die Winkelplausibilisierung ohnehin schon erfüllt.

Die Absicherung der Lenkradwinkelinformation entspricht einem Sicherheitsniveau ASIL B und kann als plausibilisierte Lenkradwinkelinformation gemäß dem Sicherheitsniveau ASIL D in dem Steuergerät der Lenkungseinheit bereitgestellt werden.

Weiterhin können die Komponenten der Lenkungseinheit redundant ausgebildet sein, um eine hohe Ausfallsicherheit zu gewährleisten.

Es kann vorgesehen sein, dass die Lenkradwinkelsensoren über separate Stromversorgungen mit elektrischer Energie von verschiedenen Versorgung Stromnetzen versorgt sind. Dies ermöglicht eine unabhängige Versorgung der Lenkradwinkelsensoren mit elektrischer Energie, um eine erhöhte Ausfallsicherheit hinsichtlich eines Fehlers der Energieversorgung bereitzustellen.

Lediglich bespielhaft wird erwähnt, dass die separaten Kommunikationsverbindungen eine separate Signalverbindung zwischen jedem der mehreren Lenkradwinkelsensoren und der Lenkungseinheit umfassen können, wobei die Signalverbindung eine elektrische Signalleitung zum Übermitteln von Sensorsignalen umfasst. Dies gewährleistet eine Unabhängigkeit von digitalen Datenbussystemen.

Ebenfalls als Beispiel kann alternativ vorgesehen sein, dass die separaten Kommunikationsverbindungen ein jeweiliges Datenbussystem zum Übertragen der Lenkradwinkelinformation von jedem der mehreren Lenkradwinkelsensoren und der Lenkungseinheit umfassen, wobei insbesondere eines der Datenbussysteme dem ersten Datenbussystem entspricht, über das die Lenkungseinheit das Rückkopplungsmoment an die Steuereinheit der Lenkradeinheit übermittelt.

Demgemäß können die Lenkradwinkelsensoren über separate Kommunikationsverbindungen mit der Lenkungssteuereinheit der Lenkungseinheit verbunden sein. Dies kann durch ein direktes Verbinden über eine Signalleitung mit dem Steuergerät der Lenkungseinheit oder über die Nutzung von separaten Bussystemen, wie beispielsweise CAN, FlexRay, Ethernet oder ein anderes Bussystem erreicht werden.

Erfindungsgemäß ist ein erster der Lenkradwinkelsensoren direkt mit der Rückkopplungseinheit verbunden, um in der Steuereinheit die Lenkradwinkelinformation bereitzustellen, wobei die Steuereinheit mit der Lenkungseinheit verbunden ist, um die entsprechende Lenkradwinkelinformation von der Steuereinheit über das erste oder das private Datenbussystem an die Lenkungseinheit zu übermitteln, wobei ein zweiter der Lenkradwinkelsensoren über ein zweites Datenbussystem mit der Lenkungseinheit verbunden ist.

Weiterhin kann die Rückkopplungseinheit der Lenkradeinheit nicht-redundant ausgebildet sein. Dies erspart Aufwand und genügt den Anforderungen für die funktionale Sicherheit dieser Komponente.

Es kann vorgesehen sein, dass das erste oder das zweite Datenbussystem mit einem weiteren Fahrzeugsystem in Kommunikationsverbindung steht.

Gemäß einem weiteren Aspekt ist ein Verfahren zum Betreiben des obigen Steer-by-Wire-Lenksystems vorgesehen, mit folgenden Schritten:
- Übermitteln der Lenkradwinkelinformationen von der Lenkradeinheit an die Lenkungseinheit über separate Kommunikationsverbindungen,
- Plausibilisieren der Lenkradwinkelinformationen, um einen plausibilisierten und abgesicherten Lenkradwinkel zu erhalten; und
- Ansteuern des Lenkaktuators abhängig von dem abgesicherten Lenkradwinkel.

### Kurzbeschreibung der Zeichnungen

Ausführungsformen werden nachfolgend anhand der beigefügten Zeichnungen näher erläutert. Es zeigen:
- Figur 1: eine schematische Darstellung eines beispielhaften Steer-by-Wire-Lenksystems;
- Figur 2: eine schematische Darstellung eines weiteren beispielhaften Steer-by-Wire-Lenksystems; und
- Figur 3: eine schematische Darstellung eines Steer-by-Wire-Lenksystems gemäß einer Ausführungsform.

### Beschreibung von Ausführungsformen

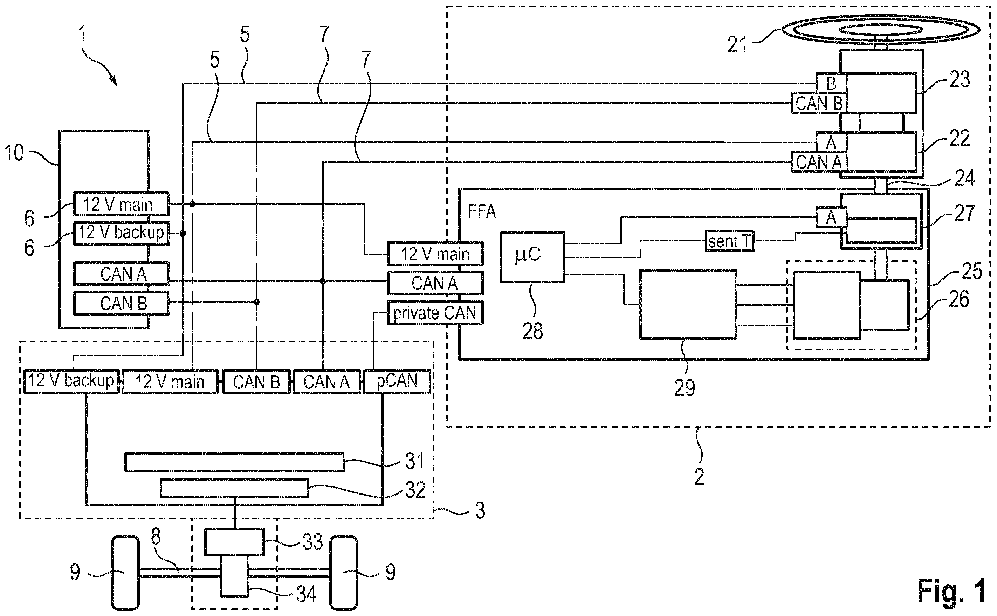

Figur 1 zeigt eine schematische Darstellung eines beispielhaften Steer-by-Wire-Lenksystems 1. Das Steer-by-Wire-Lenksystem 1 weist eine Lenkradeinheit 2 und eine Lenkungseinheit 3 auf.

Die Lenkradeinheit 2 dient zur Vorgabe eines Lenkradwinkels und umfasst eine Lenkhandhabe 21, insbesondere in Form eines Lenkrads, das mit einem ersten Lenkradwinkelsensor 22 und einem zweiten Lenkradwinkelsensor 23 gekoppelt ist, um eine redundante Erfassung des aktuellen Lenkradwinkels zu erreichen. Beispielsweise können der erste Lenkradwinkelsensor 22 und der zweite Lenkradwinkelsensor 23 an einer Lenkradwelle 24 angeordnet sein, die fest mit dem Lenkrad 21 verbunden ist. Die Lenkradwinkelsensoren 22, 23 können berührungslos arbeitende Sensoren und insbesondere in an sich bekannter Weise auf einem magnetischen oder optischen Messprinzip basieren.

Weiterhin ist das Lenkrad 21 mit einer Rückkopplungseinheit 25, über die ein Lenkradmoment über die Lenkradwelle 24 auf das Lenkrad 21 ausgeübt werden kann, um ein sogenanntes Force-Feedback zu ermöglichen. Das Force-Feedback entspricht einer haptischen Rückkopplung, die dem Fahrer des Fahrzeugs ein realistisches Lenkgefühl vermitteln soll. Die haptische Rückkopplung kann beispielsweise als gegen ein Handlenkmoment wirkendes Rückkopplungsmoment sein. Dazu werden Querkräfte, die auf die gelenkten Räder einwirken, in geeigneter Weise auf das Lenkrad 21 in Form eines Gegenmoments zu dem Handlenkmoment übertragen. Dies gibt dem Fahrer die Möglichkeit, Fahrbahneigenschaften haptisch zu erfassen.

Die Rückkopplungseinheit 25 weist in der Regel einen Rückkopplungsaktuator 26 und einen Lenkmomentensensor 27 auf. Der Rückkopplungsaktuator 26 ist ausgebildet, um eine haptische Rückkopplung abhängig von von extern auf die gelenkten Räder wirkende Querkräfte bzw. Lenkmomente in an sich bekannter Weise einzustellen.

Es ist ein Steuergerät 28 zum Beispiel in Form eines Mikrocontroller vorgesehen, um eine Angabe zu dem auf der Lenkradwelle 24 wirkende und mit dem Lenkmomentensensor 27 erfasste Lenkmoment zu erhalten und eine Leistungstreiberschaltung 29 entsprechend anzusteuern. Die Rückkopplungseinheit 25 steht dazu über ein erstes Datenbussystem CAN A, wie beispielsweise CAN, FlexRay, Ethernet oder dergleichen, mit der Lenkungseinheit 3 und ggfs. weiteren Fahrzeugsystemen in Verbindung. Zur Übertragung des Rückstellmoments kann auch ein privates Datenbussystem privateCAN zwischen der Lenkungseinheit 3 und der Lenkradeinheit 2 genutzt werden.

In dem gezeigten Beispiel können die Lenkradwinkelsensoren 22, 23 über separate Stromversorgungen 5 aus zwei voneinander unabhängigen Versorgungsstromnetzen 6 (12V main, 12V backup) bestromt sein, um eine redundante Betriebssicherheit der Lenkradwinkelsensoren 22, 23 bezüglich Versorgungsausfall zu gewährleisten.

Weiterhin können die Lenkradwinkelsensoren 22, 23 mit ihren Ausgängen über separate Kommunikationsverbindungen 7 mit der Lenkungseinheit 3 verbunden sein. Die Kommunikationsverbindung 7 zwischen dem ersten Lenkradwinkelsensor 22 und der Lenkungseinheit 3 können über das erste Datenbussystem CAN A und die Kommunikationsverbindung 7 zwischen dem zweiten Lenkradwinkelsensor 23 und der Lenkungseinheit 3 kann über ein zweites Datenbussystem CAN B erfolgen. Das erste Datenbussystem CAN A und das zweite Datenbussystem CAN B können gegebenenfalls mit weiteren Fahrzeugsystemen 10 in Kommunikationsverbindung stehen.

Die Lenkungseinheit 3 weist eine Lenkungssteuereinheit 31 auf, die mit einem Mikrocontroller 31 ausgebildet sein kann. Weiterhin weist die Lenkungseinheit 3 eine Leistungstreiberschaltung 32 und einer über die Leistungstreiberschaltung 32 angesteuerten Lenkaktuator 33 auf. Der Lenkaktuator 33 ist vorzugsweise als Elektromotor ausgebildet und ist über eine Lenkungsmechanik 34 mit einer Zahnstange 8 verbunden. Die Zahnstange 8 ist translatorisch beweglich angeordnet und mechanisch mit gelenkten Rädern 9 gekoppelt, um diese in eine Lenkstellung zu bringen.

Die Lenkungssteuereinheit 31 ist ausgebildet, um die Funktion der Lenkung der gelenkten Räder 9 übernimmt. Durch Stellen des Lenkungsaktuators 33 kann der Lenkwinkel der gelenkten Räder 9 eingestellt werden. Die Einstellung des Lenkwinkels der gelenkten Räder 9 erfolgt entsprechend einem abgesicherten Lenkradwinkel, der sich aus einer ersten Lenkradwinkelinformation und einer zweiten Lenkradwinkelinformation ergibt. Die erste Lenkradwinkelinformation und die zweite Lenkradwinkelinformation werden von dem ersten und zweiten Lenkradwinkelsensor 22, 23 über die jeweilige Kommunikationsverbindung 7 bereitgestellt. Die empfangenen Lenkradwinkelinformationen werden in der Lenkungssteuereinheit 31 der Lenkungseinheit 3 plausibilisiert, um die Absicherung des Lenkradwinkels vorzunehmen. Auf diese Weise steht in der Lenkungseinheit 3 der mit hohem Sicherheitsniveau abgesicherte Lenkradwinkel zur Verfügung.

Die Übermittlung der Lenkradwinkelinformation von dem ersten und zweiten Lenkradwinkelsensor 22, 23 erfolgt über zwei separate Datenbussysteme 7, das erste Datenbussystem CAN A bzw. das zweite Datenbussystem CAN B. Jedes der Datenbussysteme 7 kann auch zu Übermittlung weiterer Daten ausgebildet sein. So kann beispielsweise das erste Datenbussystem 7 CAN A sowohl die Lenkwinkelinformation von dem ersten Lenkradwinkelsensor 22 an die Lenkungseinheit 3 übertragen als auch dazu genutzt werden, um von der Lenkungseinheit 3 das Rückkopplungsmoment an das Steuergerät 28 zu übermitteln.

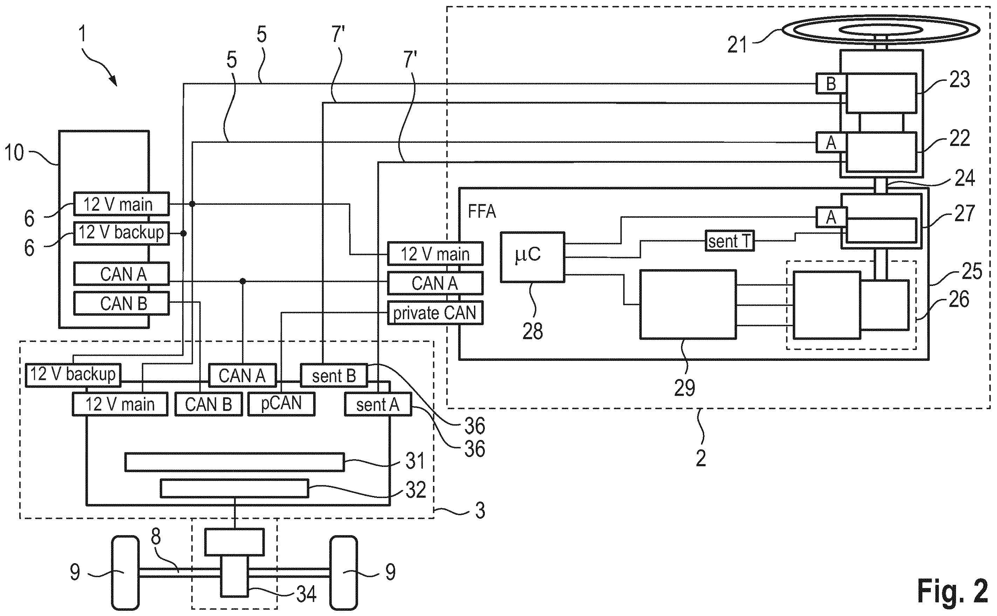

Bei dem Beispiel der Figur 2 sind die Lenkradwinkelsensoren 22, 23 nicht über ein jeweiliges Datenbussystem 7 mit der Lenkungseinheit 32 verbunden. Stattdessen sind die Lenkradwinkelsensoren 22, 23 direkt über Signalleitungen 7' mit entsprechenden Signaleingängen 36 der Lenkungseinheit 3 verbunden. Dies stellt eine Vereinfachung dar, durch die eine schnellere Kommunikation, stabileres Timing und eine höhere Signalauflösung bezüglich der an die Lenkungseinheit 3 übermittelten Lenkradwinkelinformation erreicht werden kann. Die Signalleitungen 7' können elektrischen Verbindungsleitungen zum Übertragen eines digitalen oder analogen Sensorsignals umfassen.

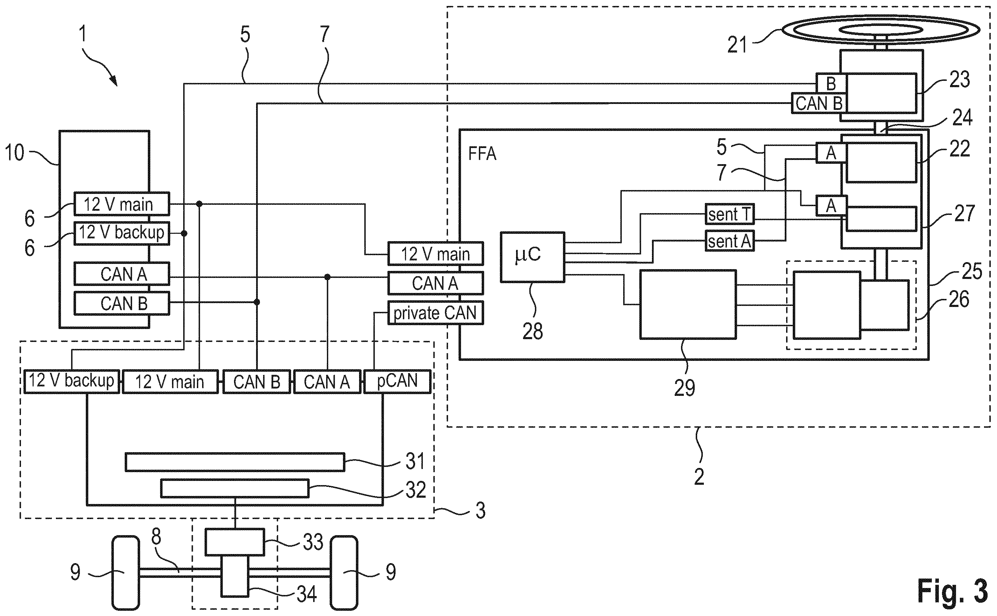

Die Ausführungsform der Figur 3 zeigt ein Steer-by-Wire-Lenksystem, bei dem der zweite Lenkradwinkelsensor 23 direkt über das zweite Datenbussystem 7 oder die zweite Signalleitung 7' mit der Lenkungseinheit 3 verbunden ist.

Der erste Lenkradwinkelsensor 22 wird dagegen über das Steuergerät 28 der Lenkradeinheit 2 ausgelesen. Somit steht die Lenkradwinkelinformation des ersten Lenkradwinkelsensors 22 in dem Steuergerät 28 der Lenkradeinheit 2 zur Verfügung. Wie oben beschrieben ist das Steuergerät 28 mit der Lenkungseinheit 3 über das erste Datenbussystem 7 verbunden und nutzt dazu das erste Datenbussystem CAN A, mit dem die Lenkradeinheit 2 mit der Lenkungseinheit 3 ohnehin verbunden ist, um das Rückstellmoment von der Lenkungseinheit 3 an die Lenkradeinheit 2 zu übermitteln. Somit kann das erste Datenbussystem CAN A oder der private Datenbus privateCAN zwischen der Lenkradeinheit 2 und der Lenkungseinheit 3 zusätzlich zur Übermittlung der redundanten Lenkradwinkelinformation genutzt werden.

Somit kann die Lenkradwinkelinformation über verschiedene Wege an die Lenkungseinheit 3 übermittelt werden, wo die Plausibilisierung der Lenkradwinkelinformationen zum Erhalten des plausibilisierten Lenkradwinkels durchgeführt werden kann. Auf diese Weise kann erreicht werden, dass aufgrund des niedrigeren Sicherheitsniveaus die Rückkopplungseinheit 25 der Lenkradeinheit 2 nur einkanalig bzw. nicht redundant ausgelegt sein muss, da diese lediglich das Sicherheitsniveau ASIL B einhalten muss. Die geforderte Plausibilisierung der Lenkradwinkelinformation findet dagegen in einer Einheit mit hohem Sicherheitsniveau statt. Diese Einheit entspricht der Lenkungseinheit 3, die ohnehin gemäß einem hohen geforderten Sicherheitsniveau von ASIL D ausgeführt wird.

In einer weiteren Ausführungsform kann die Plausibilisierung der Lenkradwinkelinformation auch in einem von der Lenkungseinheit 3 separaten Steuergerät im Fahrzeug erfolgen, das eine entsprechende Sicherheitsintegrität und Redundanz gemäß dem geforderten Sicherheitsniveau aufweist.

### Bezugszeichenliste

- 1: Steer-by-Wire-Lenksystem
- 2: Lenkradeinheit
- 21: Lenkhandhabe
- 22: erster Lenkradwinkelsensor
- 23: zweiter Lenkradwinkelsensor
- 24: Lenkradwelle
- 25: Rückkopplungseinheit
- 26: Rückkopplungsaktuator
- 27: Lenkmomentensensor
- 28: Steuergerät
- 29: Leistungstreiberschaltung
- 3: Lenkungseinheit
- 31: Lenkungssteuereinheit
- 32: Leistungstreiberschaltung
- 33: Lenkaktuator
- 34: Lenkungsmechanik
- 5: Stromversorgungen
- 6: Versorgungsstromnetz
- 7: Kommunikationsverbindungen
- 8: Zahnstange
- 9: gelenkte Räder
- CAN A: erstes Datenbussystem
- CAN B: zweites Datenbussystem
- privateCAN: privates Datenbussystem
- 36: Signaleingänge

## Patentansprüche

1. Steer-by-Wire-Lenksystem (1) zur Lenkung eines Kraftfahrzeugs, umfassend:
- eine Lenkradeinheit (2), die aufweist:
∘ eine Lenkhandhabe (21);
∘ mehrere Lenkradwinkelsensoren (22, 23) zur redundanten Erfassung einer Lenkradwinkelinformation,
∘ eine nicht-redundant ausgebildete Rückkopplungseinheit (25), die ausgebildet ist, um eine haptische Rückkopplung oder ein Rückkopplungsmoment auf die Lenkhandhabe (21) auszuüben;
∘ eine Steuereinheit (28), die über ein erstes oder ein privates Datenbussystem (CAN A, privateCAN) mit einer Lenkungseinheit (3) in Verbindung steht, um eine Angabe über die haptische Rückkopplung oder das Rückkopplungsmoment zu erhalten und um die Rückkopplungseinheit (25) so anzusteuern, dass diese die haptische Rückkopplung oder das Rückkopplungsmoment auf die Lenkhandhabe (21) ausübt;
- die Lenkungseinheit (3), die aufweist:
∘ einen Lenkaktuator (33), der über eine Lenkungsmechanik (34) mit gelenkten Rädern (9) in Verbindung steht, um den Lenkwinkel der gelenkten Räder (9) einzustellen;
∘ ein Lenkungssteuergerät (31), das ausgebildet ist, um mehrere Lenkradwinkelinformationen von den mehreren Lenkradwinkelsensoren (22, 23) zu erhalten, diese zu plausibilisieren und abhängig von dem plausibilisierten und abgesicherten Lenkradwinkel den Lenkaktuator (33) anzusteuern;
wobei die Lenkradwinkelsensoren (22, 23) die jeweiligen Lenkradwinkelinformationen über separate Kommunikationsverbindungen (7) an die Lenkungseinheit (3) übermitteln,
wobei ein erster der Lenkradwinkelsensoren (22) direkt mit der Rückkopplungseinheit (25) verbunden ist, um in der Steuereinheit (28) die Lenkradwinkelinformation bereitzustellen, wobei die Steuereinheit (28) mit der Lenkungseinheit (3) verbunden ist, um die entsprechende Lenkradwinkelinformation von der Steuereinheit (28) über das erste oder das private Datenbussystem (CAN A, privateCAN) an die Lenkungseinheit (3) zu übermitteln, wobei ein zweiter der Lenkradwinkelsensoren (23) über ein zweites Datenbussystem (CAN B) mit der Lenkungseinheit (3) verbunden ist.

2. Steer-by-Wire-Lenksystem (1) nach Anspruch 1, wobei die Komponenten der Lenkungseinheit (3) redundant ausgebildet sind, um eine hohe Ausfallsicherheit zu gewährleisten.

3. Steer-by-Wire-Lenksystem (1) nach Anspruch 1 oder 2, wobei die
Lenkradwinkelsensoren (22, 23) über separate Stromversorgungen (6) mit elektrischer Energie von verschiedenen Versorgungstromnetzen versorgt sind.

4. Steer-by-Wire-Lenksystem (1) nach einem der Ansprüche 1 bis 3, wobei das erste oder das zweite Datenbussystem (CAN A, CAN B) mit einem weiteren Fahrzeugsystem in Kommunikationsverbindung steht.

5. Verfahren zum Betreiben eines Steer-by-Wire-Lenksystems (1) nach einem der Ansprüche 1 bis 4, mit folgenden Schritten:
- Übermitteln der Lenkradwinkelinformationen von der Lenkradeinheit (2) an die Lenkungseinheit (3) über separate Kommunikationsverbindungen (7, 7'),
- Plausibilisieren der Lenkradwinkelinformationen, um einen plausibilisierten und abgesicherten Lenkradwinkel zu erhalten;
- Ansteuern des Lenkaktuators (33) abhängig von dem abgesicherten Lenkradwinkel.

## Claims

1. Steer-by-wire steering system (1) for steering a motor vehicle, comprising:
- a steering wheel unit (2) which has:
∘ a steering handle (21);
∘ a plurality of steering wheel angle sensors (22, 23) for redundant detection of steering wheel angle information;
∘ a non-redundant feedback unit (25) which is designed to apply haptic feedback or a feedback torque to the steering handle (21);
∘ a control unit (28) which is connected to a steering unit (3) via a first or a private data bus system (CAN A, privateCAN) in order to receive information about the haptic feedback or the feedback torque and to control the feedback unit (25) in such a way that it applies the haptic feedback or the feedback torque to the steering handle (21);
- the steering unit (3), which has:
∘ a steering actuator (33) which is connected to steered wheels (9) via a steering mechanism (34) in order to adjust the steering angle of the steered wheels (9);
∘ a steering control device (31) which is designed to receive a plurality of items of steering wheel angle information from the plurality of steering wheel angle sensors (22, 23), to check the plausibility of said information, and to control the steering actuator (33) depending on the steering wheel angle which has been checked for plausibility and safety;
wherein the steering wheel angle sensors (22, 23) transmit the respective items of steering wheel angle information to the steering unit (3) via separate communication connections (7), wherein a first of the steering wheel angle sensors (22) is connected directly to the feedback unit (25) in order to provide the steering wheel angle information in the control unit (28), wherein the control unit (28) is connected to the steering unit (3) in order to transmit the corresponding steering wheel angle information from the control unit (28) to the steering unit (3) via the first or the private data bus system (CAN A, privateCAN), wherein a second of the steering wheel angle sensors (23) is connected to the steering unit (3) via a second data bus system (CAN B).

2. Steer-by-wire steering system (1) according to claim 1, wherein the components of the steering unit (3) are designed to be redundant, in order to ensure a high level of reliability.

3. Steer-by-wire steering system (1) according to claim 1 or 2, wherein the steering wheel angle sensors (22, 23) are supplied with electrical energy from different power supply networks via separate power supplies (6).

4. Steer-by-wire steering system (1) according to one of claims 1 to 3, wherein the first or the second data bus system (CAN A, CAN B) is in communicative connection with another vehicle system.

5. Method for operating a steer-by-wire steering system (1) according to any of claims 1 to 4, comprising the following steps:
- transmitting the items of steering wheel angle information from the steering wheel unit (2) to the steering unit (3) via separate communication connections (7, 7'),
- checking the plausibility of the items of steering wheel angle information in order to obtain a steering wheel angle which has been checked for plausibility and safety;
- controlling the steering actuator (33) depending on the steering wheel angle which has been checked for safety.

## Revendications

1. **Système** de direction à commande par câble électrique (1) pour la direction d'un véhicule automobile, comprenant :
- une unité formant volant de direction (2) présentant :
∘ une manette de direction (21) ;
∘ plusieurs capteurs d'angle de volant de direction (22, 23) pour la saisie redondante d'une information d'angle de volant de direction,
∘ une unité de rétroaction (25) configurée de manière non redondante, laquelle est configurée pour exercer une rétroaction haptique ou un couple de rétroaction sur la manette de direction (21) ;
∘ une unité de commande (28) qui est en connexion avec une unité de direction (3) par l'intermédiaire d'un premier système de bus de données ou d'un système de bus de données privé (CAN A, privateCAN) afin d'obtenir une indication concernant la rétroaction haptique ou le couple de rétroaction et afin de commander l'unité de rétroaction (25) de telle sorte qu'elle exerce la rétroaction haptique ou le couple de rétroaction sur la manette de direction (21) ;
- l'unité de direction (3) présentant :
∘ un actionneur de direction (33) qui est en liaison avec des roues directrices (9) par l'intermédiaire d'un mécanisme de direction (34) afin d'ajuster l'angle de direction des roues directrices (9) ;
∘ un appareil de commande de direction (31) configuré pour obtenir plusieurs informations d'angle de volant de direction à partir des plusieurs capteurs d'angle de volant de direction (22, 23), afin de les rendre plausibles et de commander l'actionneur de direction (33) en fonction de l'angle de volant de direction rendu plausible et garanti ;
dans lequel les capteurs d'angle de volant de direction (22, 23) transmettent les informations d'angle de volant de direction respectives à l'unité de direction (3) par l'intermédiaire de liaisons de communication (7) séparées, dans lequel un premier des capteurs d'angle de volant de direction (22) est directement connecté à l'unité de rétroaction (25) afin de fournir l'information d'angle de volant de direction dans l'unité de commande (28), dans lequel l'unité de commande (28) est connectée à l'unité de direction (3) afin de transmettre l'information d'angle de volant de direction correspondante de l'unité de commande (28) à l'unité de direction (3) par l'intermédiaire du premier système de bus de données ou du système de bus de données privé (CAN A, privateCAN), dans lequel un second des capteurs d'angle de volant de direction (23) est connecté à l'unité de direction (3) par l'intermédiaire d'un second système de bus de données (CAN B).

2. Système de direction à commande par câble électrique (1) selon la revendication 1, dans lequel les composants de l'unité de direction (3) sont configurés de manière redondante afin de garantir une sécurité élevée contre les défaillances.

3. Système de direction à commande par câble électrique (1) selon la revendication 1 ou 2, dans lequel les capteurs d'angle de volant de direction (22, 23) sont alimentés en énergie électrique par l'intermédiaire d'alimentations en courant (6) séparées provenant de différents réseaux d'alimentation en courant.

4. Système de direction à commande par câble électrique (1) selon l'une des revendications 1 à 3, dans lequel le premier ou le second système de bus de données (CAN A, CAN B) est en liaison de communication avec un autre système de véhicule.

5. Procédé permettant de faire fonctionner un système de direction à commande par câble électrique (1) selon l'une des revendications 1 à 4, comportant les étapes suivantes :
- transmission des informations d'angle de volant de direction de l'unité formant volant de direction (2) à l'unité de direction (3) par l'intermédiaire de liaisons de communication (7, 7') séparées,
- fait de rendre plausibles des informations d'angle de volant de direction afin d'obtenir un angle de volant de direction plausible et garanti ;
- commande de l'actionneur de direction (33) en fonction de l'angle de volant de direction garanti.
